(19) Europäisches Patentamt

European Patent Office

Office européen des brevets

(11) **EP 1 511 028 A1**

(12) **EUROPEAN PATENT APPLICATION**
published in accordance with Art. 158(3) EPC

(43) Date of publication:
02.03.2005 Bulletin 2005/09

(51) Int Cl.⁷: **G11B 11/105**, G11B 7/24,
G11B 7/007

(21) Application number: 02730850.1

(22) Date of filing: 31.05.2002

(86) International application number:
**PCT/JP2002/005382**

(87) International publication number:
**WO 2003/102943 (11.12.2003 Gazette 2003/50)**

(84) Designated Contracting States:
**AT BE CH CY DE DK ES FI FR GB GR IE IT LI LU
MC NL PT SE TR**
Designated Extension States:
**AL LT LV MK RO SI**

(71) Applicant: **FUJITSU LIMITED**
**Kawasaki-shi, Kanagawa 211-8588 (JP)**

(72) Inventor: **HOSOKAWA, Tetsuo,**
**YAMAGATA FUJITSU LIMITED**
**Higashine-shi, Yamagata 999-3701 (JP)**

(74) Representative: **Sunderland, James Harry**
**Haseltine Lake & Co.,**
**Imperial House,**
**15-19 Kingsway**
**London WC2B 6UD (GB)**

(54) **OPTICAL RECORDING MEDIUM, AND OPTICAL STORAGE DEVICE**

(57)    An optical recording medium having recording tracks consisting of a plurality of lands and a plurality of grooves, wherein the diameter of a laser beam to be used for recording/reproduction on a recording surface of the medium is 0.7 µm or less. The optical recording medium includes a transparent substrate on which the lands and the grooves are alternately formed and an optically recordable recording layer provided on the transparent substrate. The width w1 of each land at the center of the height of the boundary between each land and each groove adjacent thereto, the width w2 of a flat top surface of each land, and the depth d of each groove are set to $0.4 \leq w2/w1 \leq 0.8$ and $25\ nm \leq d \leq 45\ nm$. At least each land has an edge portion formed as a curved surface.

# FIG.1

**Description**

Technical Field

The present invention relates generally to an optical recording medium, and more particularly to a land/groove recording type magneto-optical recording medium.

Background Art

A method of shortening the wavelength of a laser to be used in recording or reproducing data is investigated as one method for increasing a recording density on an optical disk. For example, the wavelength of a laser used in a 3.5-inch magneto-optical disk drive at present is 650 nm. By using a blue laser having a wavelength of 405 nm instead, the diameter of a beam spot on a recording surface of the disk can be reduced from about 1.0 $\mu$m to 0.65 $\mu$m, thereby allowing high-density recording.

A magneto-optical disk is known as a high-density recording medium, and an increase in its recording density is demanded with an increase in quantity of information. Increasing the recording density of the medium can be realized by shortening the space between adjacent recording marks. However, the reproduction of each recording mark is limited by the size of a light beam (beam spot) on the medium. In the case that the density of the recording marks is set so that only one recording mark is present inside the beam spot, an output waveform corresponding to "1" or "0" can be observed as a reproduced signal according to whether or not the recording mark is present inside the beam spot.

However, in the case that the density of the recording marks is increased so that a plurality of recording marks are present inside the beam spot, the reproduced output does not change irrespective of movement of the beam spot on the medium, so that the output waveform becomes linear and the presence or absence of recording marks cannot be distinguished. The reproduction of such small recording marks having a period shorter than the size of the beam spot may be effected by reducing the size of the beam spot. However, the size of the beam spot is limited by the wavelength $\lambda$ of light output from a light source and the numerical aperture NA of an objective lens, so that the spot size cannot be sufficiently reduced.

Recently commercially available is a magneto-optical disk drive adopting a reproducing method using a magnetically induced super-resolution (MSR) technique for reproducing a recording mark smaller than the size of the beam spot by the use of an existing optical system. The MSR is a reproducing method such that while one mark present inside the beam spot is being reproduced, another mark is masked to thereby increase a reproductive resolution. Accordingly, such an MSR medium requires at least a mask layer or reproducing layer for masking the other mark so that the one mark is reproduced during signal reproduction, in addition to a recording layer for recording marks.

For example, there has been proposed a CAD (center aperture detection) type MSR medium such that a nonmagnetic layer is interposed between a reproducing layer and a recording layer, and a recorded mark in the recording layer is transferred to the reproducing layer by magnetostatic coupling to thereby reproduce information. A longitudinally magnetized film having an axis of easy magnetization in a longitudinal direction at room temperature is used as the reproducing layer, and the recorded mark in the recording layer at only a portion heated to a high temperature by the irradiation with a laser beam is transferred to the reproducing layer to thereby mask the other portion except the above heated portion for reproduction by means of the reproducing layer, thus allowing super-resolution reproduction. In the CAD medium, longitudinal magnetization in the reproducing layer at the other portion except the aperture portion is not detected, and it is resistant against crosstalk from the adjacent track, thereby allowing a reduction in track pitch.

In recent years, the development for reducing the beam diameter has become active by using a short-wavelength laser or a high-NA lens as means for realizing the high recording density on an optical disk. For example, in an optical system of an existing magneto-optical disk drive using a laser beam having a wavelength of 650 nm and a lens having a numerical aperture NA of 0.55, the beam spot diameter is about 1.0 $\mu$m ($1/e^2$). However, by using a laser beam having a wavelength of 405 nm with the same lens having a numerical aperture NA of 0.55, the beam spot diameter can be reduced to about 0.65 $\mu$m. Reducing the beam spot diameter can improve a resolution, so that a small mark can be recorded to thereby increase the recording density. By changing the wavelength of the laser beam from 650 nm to 405 nm, both the mark length and the track pitch can be reduced and the recording density can therefore be expected to increase about 2.5 times.

However, in the case of applying the conventional CAD medium using a laser beam having a wavelength of 650 nm to the recording/reproduction with a laser beam having a wavelength of 405 nm, there has occurred a problem that a sufficient recording/reproduction signal quality cannot be obtained with a wavelength-converted mark length. For example, while the CAD medium using a laser beam having a wavelength of 650 nm is now in practical use, a CN ratio of about 45 dB is obtained with a shortest mark length of 0.40 $\mu$m. By using a laser beam having a wavelength of 405 nm, a CN ratio of about 45 dB should be obtained with a mark length of 0.25 $\mu$m in terms of beam diameter.

Actually, however, there is a problem that a low CN ratio of about 42 dB is obtained with a mark length of 0.25 μm even in the case of using a laser beam having a wavelength of 405 nm. In a magneto-optical recording medium using lands and grooves as recording tracks, the above problem remarkably appears on the lands. Further, also in a general magneto-optical recording medium as well as the above CAD type magneto-optical recording medium, it has become apparent that a sufficient CN ratio cannot be obtained in reproducing information on the lands in the case of using a blue laser beam having a wavelength of 405 nm.

**Disclosure of the Invention**

It is therefore an object of the present invention to provide an optical recording medium which can realize good recording/reproduction characteristics both on the lands and on the grooves in a small beam diameter obtained by using a short-wavelength laser.

It is another object of the present invention to provide an optical storage device which can realize a good reproduction characteristic both on the lands and on the grooves in a small beam diameter obtained by using a short-wavelength laser.

In accordance with an aspect of the present invention, there is provided an optical recording medium having recording tracks consisting of a plurality of lands and a plurality of grooves, wherein the diameter of a laser beam to be used for recording/reproduction on a recording surface of the medium is 0.7 μm or less, the optical recording medium comprising a transparent substrate on which the lands and the grooves are alternately formed; and an optically recordable recording layer provided on the transparent substrate; the width w1 of each land at the center of the height of the boundary between each land and each groove adjacent thereto, the width w2 of a flat top surface of each land, and the depth d of each groove being set to $0.4 \leqq w2/w1 \leqq 0.8$ and $25\ nm \leqq d \leqq 45\ nm$; at least each land having an edge portion formed as a curved surface.

Preferably, each groove has an edge portion formed as a curved surface, and the recording layer comprises a magneto-optical recording layer formed of a rare earth-transition metal composite material.

In accordance with another aspect of the present invention, there is provided a magneto-optical recording medium having recording tracks consisting of a plurality of lands and a plurality of grooves, wherein the diameter of a laser beam to be used for recording/reproduction on a recording surface of the medium is 0.7 μm or less, the magneto-optical recording medium comprising a transparent substrate on which the lands and the grooves are alternately formed; a reproducing layer provided on the transparent substrate and formed of a rare earth-transition metal composite material having a relatively large Kerr rotation angle and a relatively small coercivity at room temperature; and a recording layer provided on the reproducing layer and formed of a rare earth-transition metal composite material having a relatively small Kerr rotation angle and a relatively large coercivity at room temperature; the width w1 of each land at the center of the height of the boundary between each land and each groove adjacent thereto, the width w2 of a flat top surface of each land, and the depth d of each groove being set to $0.4 \leqq w2/w1 \leqq 0.8$ and $25\ nm \leqq d \leqq 45\ nm$; at least each land having an edge portion formed as a curved surface.

In accordance with a further aspect of the present invention, there is provided a magneto-optical recording medium having recording tracks consisting of a plurality of lands and a plurality of grooves, wherein the diameter of a laser beam to be used for recording/reproduction on a recording surface of the medium is 0.7 μm or less, the magneto-optical recording medium comprising a transparent substrate on which the lands and the grooves are alternately formed; a first reproducing layer provided on the transparent substrate and having an axis of easy magnetization in a longitudinal direction at room temperature; a second reproducing layer provided on the first reproducing layer and having an axis of easy magnetization in a longitudinal direction at room temperature; a nonmagnetic block layer provided on the second reproducing layer; a recording layer provided on the nonmagnetic block layer and having an axis of easy magnetization in a perpendicular direction at room temperature in the case of a single layer; a nonmagnetic overcoat layer provided on the recording layer; and a metal layer provided on the nonmagnetic overcoat layer; the width w1 of each land at the center of the height of the boundary between each land and each groove adjacent thereto, the width w2 of a flat top surface of each land, and the depth d of each groove being set to $0.4 \leqq w2/w1 \leqq 0.8$ and $25\ nm \leqq d \leqq 45\ nm$; at least each land having an edge portion formed as a curved surface.

Preferably, the first and second reproducing layers respectively have Curie temperatures Tc1 and Tc2 set to $Tc2 \leqq Tc1$ and $160°C \leqq Tc2 \leqq 190°C$.

Preferably, the first reproducing layer has a thickness tr1 of 25 to 35 nm, and the second reproducing layer has a thickness tr2 set to $tr1 \times 0.3 \leqq tr2 \leqq tr1 \times 0.4$.

Preferably, the nonmagnetic overcoat layer has a thickness of 5 to 15 nm, the metal layer has a thickness of 50 to 90 nm, and the nonmagnetic block layer has a thickness of 0.5 to 2 nm.

In accordance with a still further aspect of the present invention, there is provided an optical storage device capable of at least reading information recorded on an optical recording medium having recording tracks consisting of a plurality of lands and a plurality of grooves, the optical storage device comprising an optical head for irradiating the optical recording medium with a laser beam having a diameter of 0.7 μm or less on a recording surface of the medium; and a photodetector for generating a reproduction signal from reflected light reflected on the optical recording medium; the optical recording medium comprising a transparent substrate on which the lands and the grooves are alternately formed and an optically recordable recording layer provided on the transparent substrate; the width w1 of each land at the center of the height of the boundary between each land and each groove adjacent thereto, the width w2 of a flat top surface of each land, and the depth d of each groove being set to $0.4 \leqq w2/w1 \leqq 0.8$ and $25 \text{ nm} \leqq d \leqq 45 \text{ nm}$; at least each land having an edge portion formed as a curved surface.

**Brief Description of the Drawings**

FIG. 1 is a partially cutaway, sectional view of a land/groove recording type optical storage medium;

FIG. 2 is a schematic sectional view showing the configuration of a magneto-optical recording medium according to a first preferred embodiment of the present invention;

FIG. 3 is a schematic sectional view showing the configuration of a magneto-optical recording medium according to a second preferred embodiment of the present invention;

FIG. 4 is a schematic sectional view showing the configuration of a magneto-optical recording medium according to a third preferred embodiment of the present invention;

FIG. 5 is a schematic sectional view showing the configuration of a magneto-optical recording medium according to a fourth preferred embodiment of the present invention;

FIG. 6 is a schematic sectional view showing the configuration of a magneto-optical recording medium according to a fifth preferred embodiment of the present invention;

FIG. 7 is a photograph of a substrate having angular grooves (angular lands) used in the test according to the present invention;

FIG. 8 is a photograph of a substrate having round grooves (round lands) used in the test according to the present invention;

FIG. 9 is a graph showing the dependence of the CN ratio of the magneto-optical recording medium (CAD medium) according to the third preferred embodiment shown in FIG. 4 upon w2/w1;

FIG. 10 is a graph showing the dependence of the CN ratio of the magneto-optical recording medium (CAD medium) shown in FIG. 4 upon the groove depth d;

FIG. 11 is a graph showing the dependence of the CN ratio of the magneto-optical recording medium (normal MO medium) according to the fourth preferred embodiment shown in FIG. 5 upon w2/w1;

FIG. 12 is a graph showing the dependence of the CN ratio of the magneto-optical recording medium (normal MO medium) according to the fourth preferred embodiment shown in FIG. 5 upon the groove depth d;

FIG. 13 is a graph showing the dependence of the CN ratio of the magneto-optical recording medium (dual-layer medium) according to the fifth preferred embodiment shown in FIG. 6 upon w2/w1;

FIG. 14 is a graph showing the dependence of the CN ratio of the magneto-optical recording medium (dual-layer medium) according to the fifth preferred embodiment shown in FIG. 6 upon the groove depth d;

FIG. 15 is a graph showing the dependence of the CN ratio of the magneto-optical recording medium according to the third preferred embodiment shown in FIG. 4 upon the Curie temperature Tc of the second reproducing layer;

FIG. 16 is a graph showing the dependence of the CN ratio of the magneto-optical recording medium according to the third preferred embodiment upon the thickness of the first reproducing layer;

FIG. 17 is a graph showing the dependence of the CN ratio of the magneto-optical recording medium according to the third preferred embodiment upon the thickness of the second reproducing layer;

FIG. 18 is a graph showing the dependence of the CN ratio of the magneto-optical recording medium according to the third preferred embodiment upon the thickness of the nonmagnetic block layer;

FIG. 19 is a graph showing the dependence of the CN ratio of the magneto-optical recording medium according to the third preferred embodiment upon the thickness of the overcoat layer;

FIG. 20 is a graph showing the dependence of the recording sensitivity of the magneto-optical recording medium according to the third preferred embodiment upon the thickness of the overcoat layer;

FIG. 21 is a graph showing the dependence of the CN ratio of the magneto-optical recording medium according to the third preferred embodiment upon the thickness of the Al layer;

FIG. 22 is a graph showing the dependence of the recording sensitivity of the magneto-optical recording medium according to the third preferred embodiment upon the thickness of the Al layer;

FIG. 23 is a block diagram of an optical disk drive according to the present invention; and

FIG. 24 is a schematic view showing the internal structure of the disk drive in which an MO cartridge is loaded.

**Best Mode for Carrying Out the Invention**

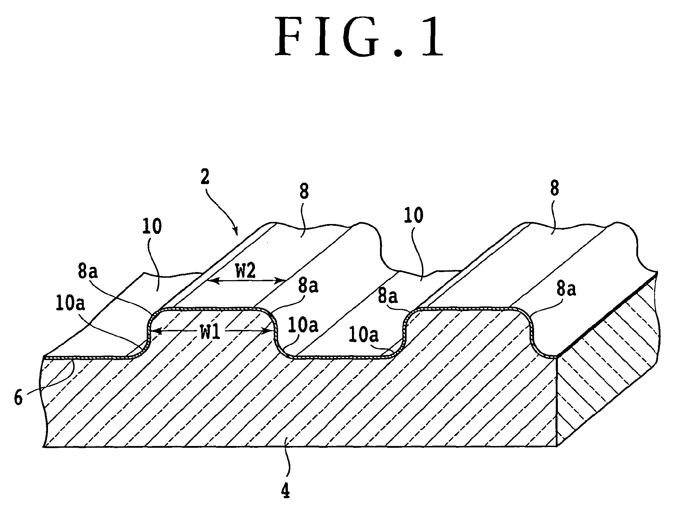

Referring to FIG. 1, there is shown a partially cutaway, sectional view of a land/groove recording type optical storage medium according to the present invention. The optical storage medium 2 usually has the form of a disk. Reference numeral 4 denotes a transparent substrate formed of glass or polycarbonate, for example. The substrate 4 has a plurality of lands 8 and a plurality of grooves 10 alternately formed. The center distance (track pitch) between any adjacent ones of the lands 8 and the grooves 10 of the substrate 4 is 0.40 μm, for example, and a recording layer 6 is formed on the substrate 4. The level difference between the lands 8 and the grooves 10 of the substrate 4 is 35 nm, for example. It is sufficient that the optical storage medium 2 applicable to the present invention is an optical storage medium having at least a land and a groove as recording tracks. As the recording layer 6, a magneto-optical recording layer or a phase-change type recording layer may be adopted, for example.

Each land 8 has a pair of edge portions 8a on the opposite sides, and each edge portion 8a is formed as a curved surface having a predetermined radius of curvature. Similarly, each groove 10 has a pair of edge portions 10a on the opposite sides, and each edge portion 10a is formed as a curved surface having a predetermined radius of curvature. As hereinafter described in detail, the width w1 of each land 8 at the center of the height of the boundary between each land 8 and each groove 10 adjacent thereto, the width w2 of a flat top surface of each land 8, and the depth d of each groove 10 are preferably set as follows:

$$0.4 \leqq w2/w1 \leqq 0.8 \text{ and } 25 \text{ nm} \leqq d \leqq 45 \text{ nm}$$

In manufacturing such an optical storage medium, a groove and pits are preliminarily formed on a transparent substrate. Specifically, a stamper having a positive resist film is used and it is exposed to a laser beam at a portion except a portion corresponding to the groove and the pits. Then, the portion corresponding to the groove and the pits is formed into a projecting portion by development and etching. At this time, the etching is performed by ion milling, sputtering, or the like to provide a predetermined curvature at a portion corresponding to the edge portions of each land and the edge portions of each groove. Then, the stamper thus prepared is mounted on a die of an injection molding machine, and a resin such as polycarbonate is supplied to the injection molding machine to thereby prepare the transparent substrate 4 of the optical storage medium which has a plurality of lands 8 and a plurality of grooves 10 alternately formed. Thereafter, a recording layer, protective layer, and reflective layer are formed on a transfer surface (a surface formed with the groove and the pits) of the transparent substrate 4 to thereby complete the optical storage medium. A manufacturing method for such a substrate is described in Japanese Patent Laid-open No. Hei 11-232707, for example.

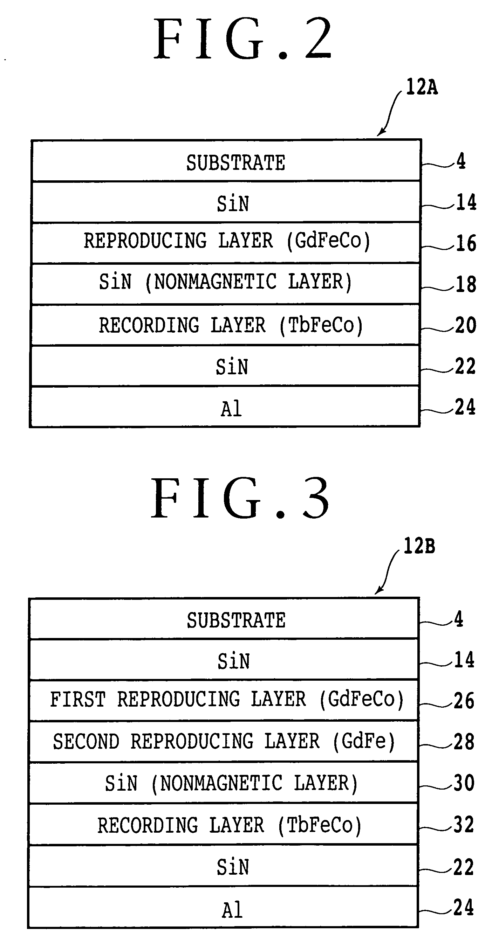

FIG. 2 shows the configuration of a magneto-optical recording medium 12A according to a first preferred embodiment of the present invention. Provided on the transparent substrate 4 shown in FIG. 1 are a base dielectric layer 14 formed of SiN, a reproducing layer 16 formed of GdFeCo, a nonmagnetic layer 18 formed of SiN, and a recording layer 20 formed of TbFeCo in this order. Further provided on the recording layer 20 are an overcoat layer 22 formed of SiN and a metal layer 24 containing Al in this order. The magneto-optical recording medium 12A according to this preferred embodiment is a CAD (center aperture detection) type magnetically induced super-resolution (MSR) medium such that a recorded mark in the recording layer 20 is transferred to the reproducing layer 16 by magnetostatic coupling. The reproducing layer 16 has a relatively large Kerr rotation angle and a relatively small coercivity at room temperature as compared with the recording layer 20. In contrast, the recording layer 20 has a relatively small Kerr rotation angle and a relatively large coercivity at room temperature as compared with the reproducing layer 16.

FIG. 3 shows the configuration of a magneto-optical recording medium 12B according to a second preferred embodiment of the present invention. Provided on the transparent substrate 4 shown in FIG. 1 are a base dielectric layer 14 formed of SiN, a first reproducing layer 26 formed of GdFeCo, a second reproducing layer 28 formed of GdFe, a nonmagnetic layer 30 formed of SiN, and a recording layer 32 formed of TbFeCo in this order. Further provided on the recording layer 32 are an overcoat layer 22 formed of SiN and a metal layer 24 containing Al in this order. The metal layer 24 may be formed of a material containing Au, Cu, or Ag as a principal component. The magneto-optical recording medium 12B according to this preferred embodiment is also a CAD type MSR medium such that a recorded mark in the recording layer 32 is transferred to the second reproducing layer 28 and the first reproducing layer 26 by magnetostatic coupling. Each of the first reproducing layer 26 and the second reproducing layer 28 has an axis of easy magnetization in the longitudinal direction at room temperature. In contrast, the recording layer 32 has an axis of easy magnetization in the perpendicular direction at room temperature in the case of a single layer.

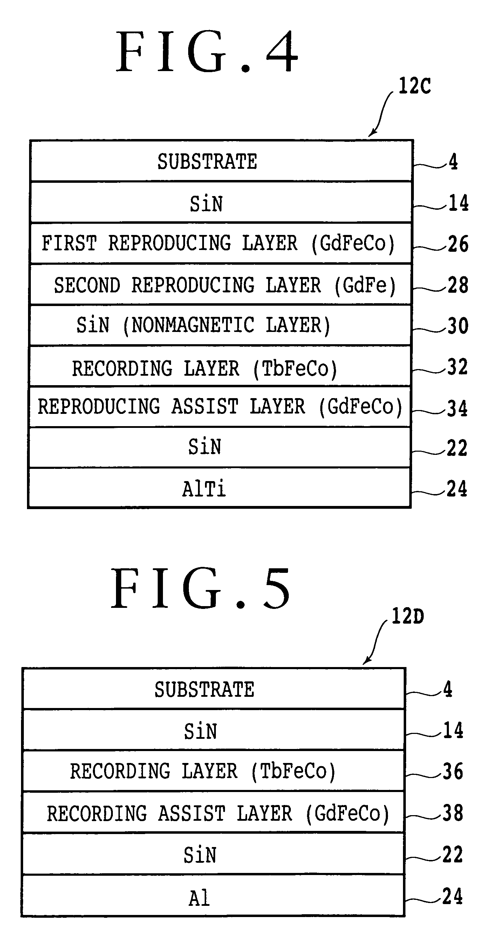

FIG. 4 shows the configuration of a magneto-optical recording medium 12C according to a third preferred embodiment of the present invention. Provided on the transparent substrate 4 shown in FIG. 1 are a base dielectric layer 14 formed of SiN, a first reproducing layer 26 formed of GdFeCo, a second reproducing layer 28 formed of GdFe, a nonmagnetic layer 30 formed of SiN, and a recording layer 32 formed of TbFeCo in this order. Further provided on the recording layer 32 are a recording assist layer 34 formed of GdFeCo, an overcoat layer 22 formed of SiN, and a metal layer 24 containing Al in this order. The magneto-optical recording medium 12C according to this preferred embodiment is also a CAD type MSR medium such that a recorded mark in the recording layer 32 is transferred to the second reproducing layer 28 and the first reproducing layer 26 by magnetostatic coupling. Each of the first reproducing layer 26 and the second reproducing layer 28 has an axis of easy magnetization in the longitudinal direction at room temperature. In contrast, the recording layer 32 has an axis of easy magnetization in the perpendicular direction at room temperature in the case of a single layer.

FIG. 5 shows the configuration of a magneto-optical recording medium 12D according to a fourth preferred embodiment of the present invention. Provided on the transparent substrate 4 shown in FIG. 1 are a base dielectric layer 14 formed of SiN, a recording layer 36 formed of TbFeCo, a recording assist layer 38 formed of GdFeCo, an overcoat layer 22 formed of SiN, and a metal layer 24 containing Al in this order. The magneto-optical recording medium 12D according to this preferred embodiment is a normal type magneto-optical recording medium.

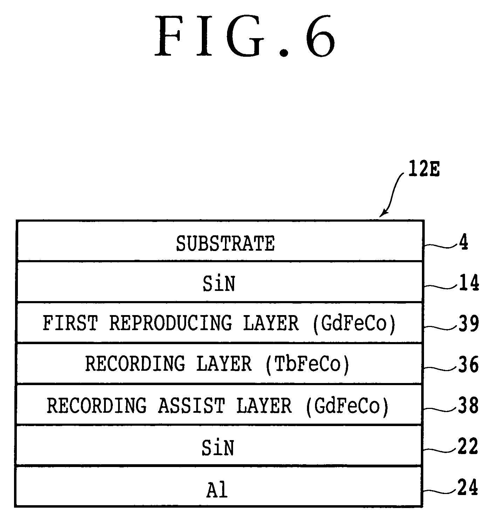

FIG. 6 shows the configuration of a magneto-optical recording medium 12E according to a fifth preferred embodiment of the present invention. Provided on the transparent substrate 4 shown in FIG. 1 are a base dielectric layer 14 formed of SiN, a reproducing layer 39 formed of GdFeCo, a recording layer 36 formed of TbFeCo, and a recording assist layer 38 formed of GdFeCo in this order. Further provided on the recording assist layer 38 are an overcoat layer 22 formed of SiN and a metal layer 24 containing Al in this order. The magneto-optical recording medium 12E is a dual-layer medium having the reproducing layer 39 and the recording layer 36.

A manufacturing method for the magneto-optical recording medium 12C according to the third preferred embodiment shown in FIG. 4 will now be described in detail. A plurality of substrates 4 were prepared in the conditions that the distance (track pitch) between each land 8 and each groove 10 adjacent thereto in each substrate 4 was set to 0.40 μm and that the value of w2/w1 and the depth d of each groove 10 mentioned with reference to FIG. 1 were changed. A stationary opposed type sputtering device having a plurality of deposition chambers (sputter chambers) each capable of achieving an ultimate vacuum of $5 \times 10^{-5}$ Pa or less was prepared. First, each substrate was carried into the first chamber in which an Si target was mounted, and Ar gas and N2 gas were introduced into the first chamber to deposit the SiN layer 14 having a thickness of 40 nm on the substrate by reactive sputtering.

The substrate was next moved into the second chamber in which a $Gd_{30}Fe_{56}Co_{14}$ alloy target was mounted, and Ar gas was introduced into the second chamber to deposit the first reproducing layer 26 formed of $Gd_{30}Fe_{56}Co_{14}$ having an RE rich composition (the compensation temperature is not lower than room temperature) by DC sputtering at room temperature. The Curie temperature of the first reproducing layer 26 is 300°C. The substrate was next moved into the third chamber in which a Gd target and an Fe target were mounted, and Ar gas was introduced into the third chamber to deposit the second reproducing layer 28 formed of GdFe by DC sputtering. The thickness of the first reproducing layer 26 was adjusted by adjusting the sputter time. The composition and thickness of the second reproducing layer 28 were adjusted by changing the applied power and deposition time for the Gd target and the Fe target. The Curie temperature of the second reproducing layer 28 was changed by adjusting the composition of Ge and Fe. Specifically, the content of Gd in the second reproducing layer 28 was changed in the range of 13 at% to 21 at%. The Curie temperature at the Gd content of 13 at% is 150°C, and the Curie temperature at the Gd content of 21 at% is 200°C.

The substrate was next returned to the first chamber to deposit the SiN nonmagnetic block layer 30. The thickness of the SiN nonmagnetic block layer 30 was adjusted by changing the deposition time. The substrate was next moved into the fourth chamber in which a $Tb_{19}Fe_{70}Co_{11}$ alloy target was mounted, and Ar gas was introduced into the fourth chamber to deposit the recording layer 32 formed of $Tb_{19}Fe_{70}Co_{11}$ by DC sputtering. The thickness of the recording layer 32 was 50 nm. The Curie temperature of the recording layer 32 is 210°C. The substrate was next moved into the fifth chamber in which a $Gd_{20}Fe_{64}Co_{16}$ alloy target was mounted, and Ar gas was introduced into the fifth chamber to deposit the recording assist layer 34 formed of $Gd_{20}Fe_{64}Co_{16}$ by DC sputtering. The thickness of the recording assist layer 34 was 6 nm.

The substrate was next returned to the first chamber to deposit the SiN overcoat layer 22. The substrate was next moved into the sixth chamber in which an AlTi alloy target containing 1.5 wt% of Ti was mounted to deposit the AlTi metal layer 24. The thicknesses of the overcoat layer 22 and the metal layer 24 were adjusted by changing the deposition time for each layer. Finally, a UV curing resin coating was formed on the metal layer 24 to obtain the magneto-optical recording medium 12C shown in FIG. 4.

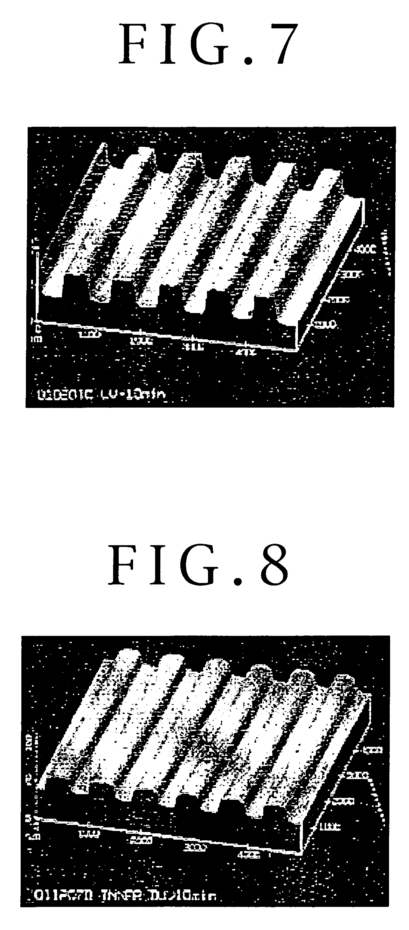

The deposition reference conditions for the magneto-optical recording medium 12C are shown in Table 1, and the CN ratios of two samples of the medium 12C using different substrates in groove shape and depth are shown in Table 2. The different groove shapes are shown in FIGS. 7 and 8.

Table 1

| Medium Design Factors | Deposition Reference Conditions |
| --- | --- |
| Curie temperature of second reproducing layer (°C) | 170 |

Table 1   (continued)

| Medium Design Factors | Deposition Reference Conditions |
|---|---|
| Thickness of first reproducing layer (nm) | 30 |
| Thickness of second reproducing layer (nm) | 10 |
| Thickness of nonmagnetic block layer (nm) | 1 |
| Thickness of overcoat layer (nm) | 10 |
| Thickness of Al layer (nm) | 70 |

Table 2

| | FIG. 8 | FIG. 7 |
|---|---|---|
| Groove shape Groove depth (nm) | 6.0/10 29 | 8.5/10 49 |
| CN ratio (Land) | 45.8 | 42.2 |
| CN ratio (Groove) | 46.2 | 45.3 |

Optical modulation recording was applied to the magneto-optical recording medium 12C by using a laser beam having a wavelength of 405 nm (NA of the objective lens = 0.55) under the conditions that the length of each recording mark was 0.25 $\mu$m and the linear velocity of the medium was 7.5 m/s. Then, the CN ratios of the two samples were measured by a spectral analyzer. As apparent from Table 2, the CN ratio of each land of the sample having angular grooves shown in FIG. 7 is as low as about 42 dB, whereas the CN ratio of each land of the sample having round or curved grooves shown in FIG. 8 is as high as about 46 dB. The difference in groove shape was obtained by changing the time of UV irradiation to the substrate surface.

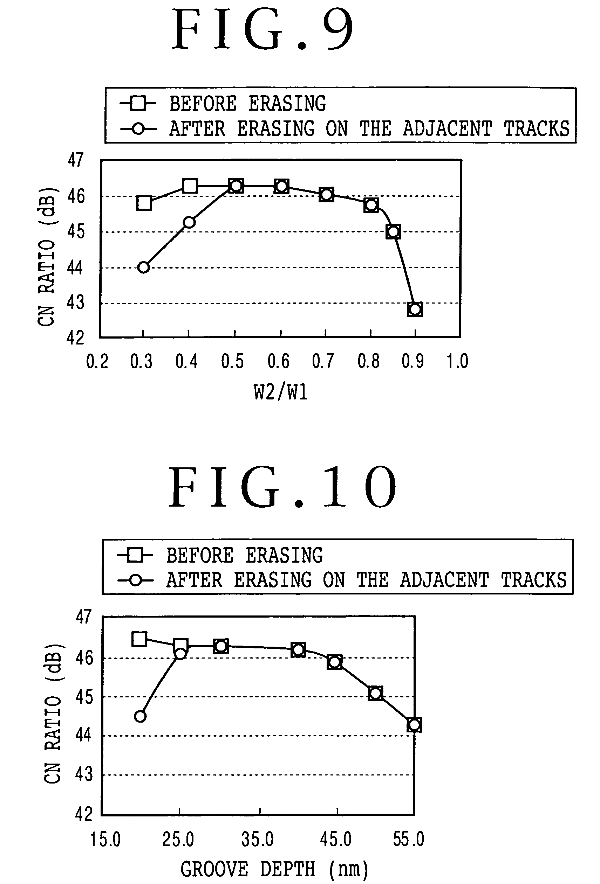

Various samples were prepared by fixing the deposition conditions shown in Table 1 and changing the value of w2/w1 of the substrate and the groove depth d. The results of measurement of the CN ratio of each land are shown in FIGS. 9 and 10. FIG. 9 shows changes in the CN ratio with changes in w2/w1 under the condition where the groove depth d was fixed to 30 nm, and FIG. 10 shows changes in the CN ratio with changes in the groove depth d under the condition where w2/w1 was fixed to 0.6. As apparent from FIG. 9, the CN ratio rapidly decreases when w2/w1 is increased to form the groove shape into a nearly angular shape. Conversely, when w2/w1 is decreased, the recorded mark is erased by a thermal effect in erasing on the adjacent tracks, thus reducing the CN ratio. The erasing power on the adjacent tracks was set to a power higher by 15% than the power capable of completely erasing the recorded mark. As understood from FIG. 9, it is preferable that w2/w1 is set in the range of 0.4 to 0.8 to obtain the CN ratio of 45 dB or more. Further, as understood from FIG. 10, it is preferable that the groove depth d is set in the range of 25 to 45 nm to obtain the CN ratio of 45 dB or more.

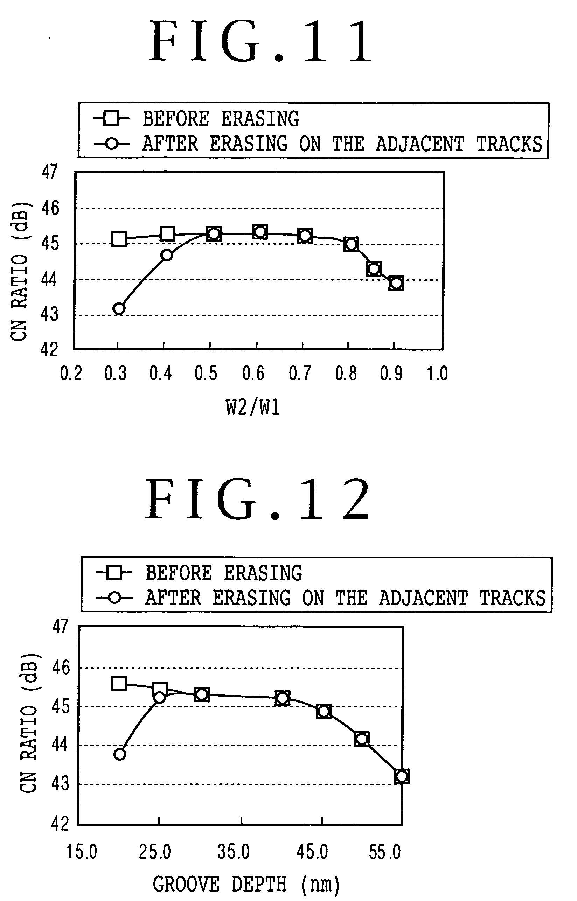

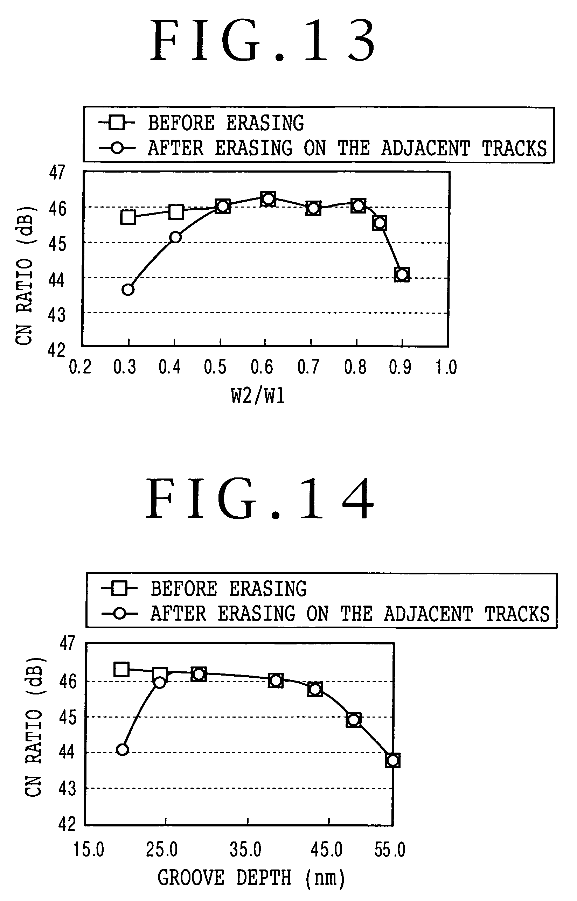

Similar tests were made on the normal magneto-optical recording medium 12D having no reproducing layer shown in FIG. 5 and the dual-layer magneto-optical recording medium 12E having the reproducing layer 39 and the recording layer 36 shown in FIG. 6. The deposition conditions of each layer of the media shown in FIGS. 5 and 6 are similar to those for the CAD medium shown in FIG. 4. Similar measurements were made under the condition where the length of a recorded mark was set to 0.45 $\mu$m. The results of these measurements are shown in FIGS. 11 to 14. More specifically, FIG. 11 shows the dependence of the CN ratio of the normal MO medium upon the value of w2/w1, and FIG. 12 shows the dependence of the CN ratio of the normal MO medium upon the groove depth d. FIG. 13 shows the dependence of the CN ratio of the dual-layer MO medium upon the value of w2/w1, and FIG. 14 shows the dependence of the CN ratio of the dual-layer MO medium upon the groove depth d. As apparent from FIGS. 11 to 14, the results of measurements on the normal MO medium and the dual-layer MO medium 12E are almost similar to those on the CAD medium 12C shown in FIG. 4. More specifically, it is preferable that w2/w1 is set in the range of 0.4 to 0.8 to obtain the CN ratio of 45 dB or more, and it is preferable that the groove depth d is set in the range of 25 to 45 nm to obtain the CN ratio of 45 dB or more. Further, it is preferable that the radius of curvature of the edge portion of each land and each groove is set not so large. Even when the edge portion is formed as a merely chamfered portion, the crosstalk can be enough suppressed to improve the CN ratio.

Further, various samples were prepared by using a substrate with the groove depth d set to 30 nm and w2/w1 set to 6/10 and changing the medium design factors shown in Table 1, and these samples were used to measure the CN ratio on each land. The reference conditions according to the present invention and the conventional conditions are compared in Table 3.

Table 3

| Medium Design Factors | Reference Conditions | Conventional Conditions |
|---|---|---|
| Curie temperature of second reproducing layer (°C) | 170 | 140 |
| Thickness of first reproducing layer (nm) | 30 | 30 |
| Thickness of second reproducing layer (nm) | 10 | 6 |
| Thickness of nonmagnetic block layer (nm) | 1 | 2 |
| Thickness of Overcoat layer (nm) | 10 | 20 |
| Thickness of Al layer (nm) | 70 | 40 |

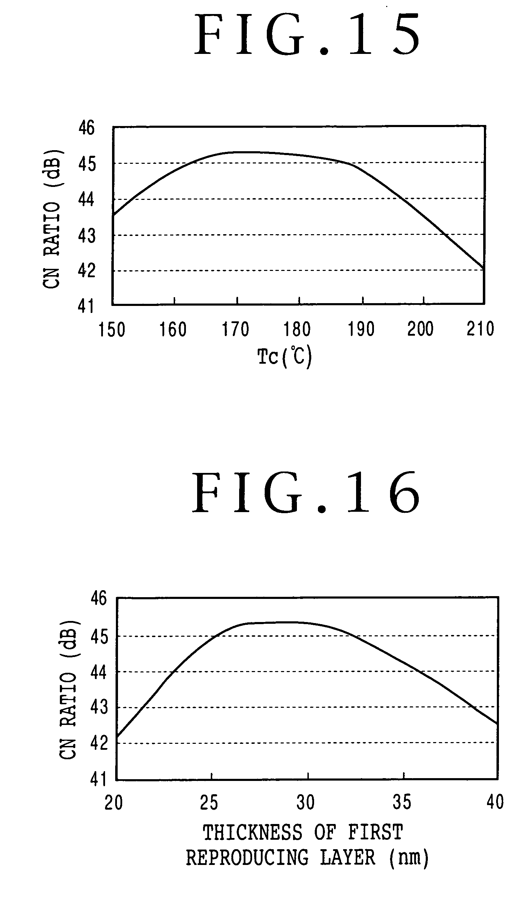

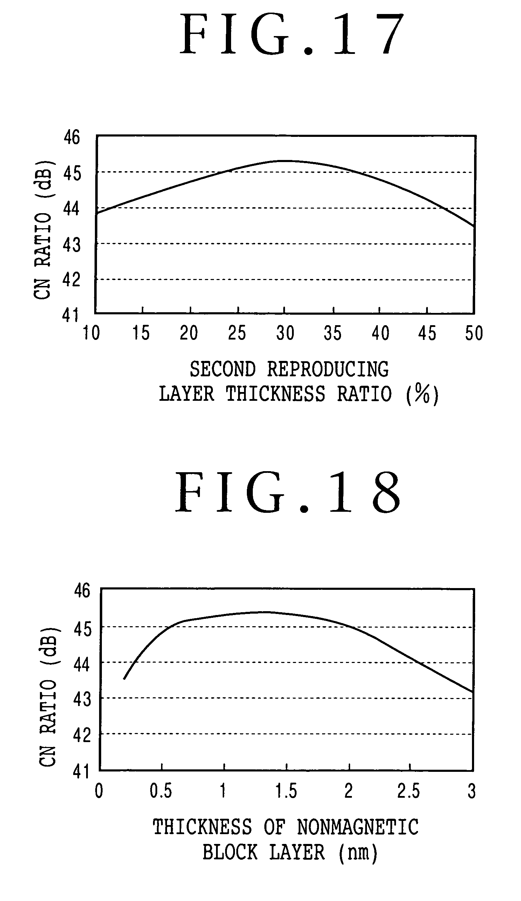

FIG. 15 shows changes in the CN ratio with changes in the Curie temperature of the second reproducing layer 28 by changing the Gd content in this layer 28. As apparent from FIG. 15, the CN ratio of 44 dB or more is obtained in the range of 160°C to 190°C for the Curie temperature of the second reproducing layer 28. FIG. 16 shows changes in the CN ratio with changes in the thickness of the first reproducing layer 26. FIG. 17 shows changes in the CN ratio with changes in second reproducing layer thickness ratio (%) (= the thickness of the second reproducing layer 28/the thickness of the first reproducing layer 26). As apparent from FIG. 16, the CN ratio rapidly decreases when the thickness of the first reproducing layer 26 is less than 25 nm, and gently decreases when the thickness of the layer 26 is greater than 30 nm. It is preferable that the thickness of the layer 26 is set to 35 nm or less to obtain the CN ratio of 44 dB or more. Further, the thickness of the second reproducing layer 28 depends on the thickness of the first reproducing layer 26. As apparent from FIG. 17, the CN ratio is improved in the range of 30% to 40% for the ratio of the thickness of the second reproducing layer 28 to the thickness of the first reproducing layer 26.

FIG. 18 shows the dependence of the CN ratio upon the thickness of the nonmagnetic block layer 30. When the thickness of the block layer 30 is less than 0.5 nm, the exchange coupling force between the recording layer 32 and the reproducing layers 26 and 28 rapidly increases to hinder the magnetostatic coupling force between the recording layer 32 and the reproducing layers 26 and 28, causing a rapid decrease in the CN ratio. Conversely, when the thickness of the nonmagnetic block layer 30 is large, the magnetostatic coupling force decreases to cause a reduction in transferability of the recorded mark, thus resulting a decrease in the CN ratio. Therefore, it is preferable that the thickness of the nonmagnetic block layer 30 is set in the range of 0.5 to 2.0 nm to improve the CN ratio.

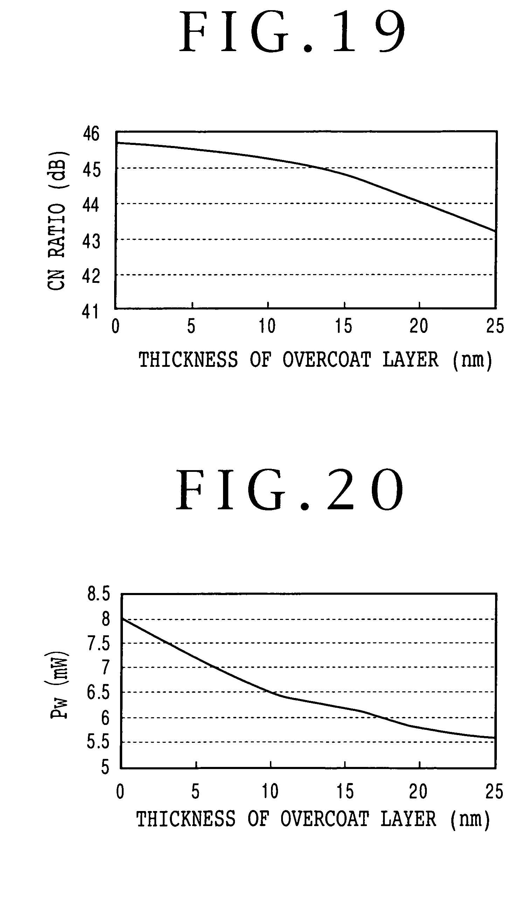

FIG. 19 shows the dependence of the CN ratio upon the thickness of the overcoat layer 22. FIG. 20 shows the dependence of recording sensitivity upon the thickness of the overcoat layer 22. As apparent from FIGS. 19 and 20, the CN ratio decreases with an increase in the thickness of the overcoat layer 22, and the recording power (Pw) decreases with an increase in the thickness of the overcoat layer 22. In optical recording, high-speed rotation is generally required to increase the transfer rate. However, when a high rotational speed is set to increase the linear velocity, the laser power required for recording becomes high. In particular, the blue laser suitable for high-density recording is lower in output than the red laser. Accordingly, it is required to minimize the recording power Pw to the medium for a higher linear velocity. As apparent from FIGS. 19 and 20, it is preferable that the thickness of the overcoat layer 22 is set in the range of 5 to 15 nm to improve the CN ratio with a low recording power.

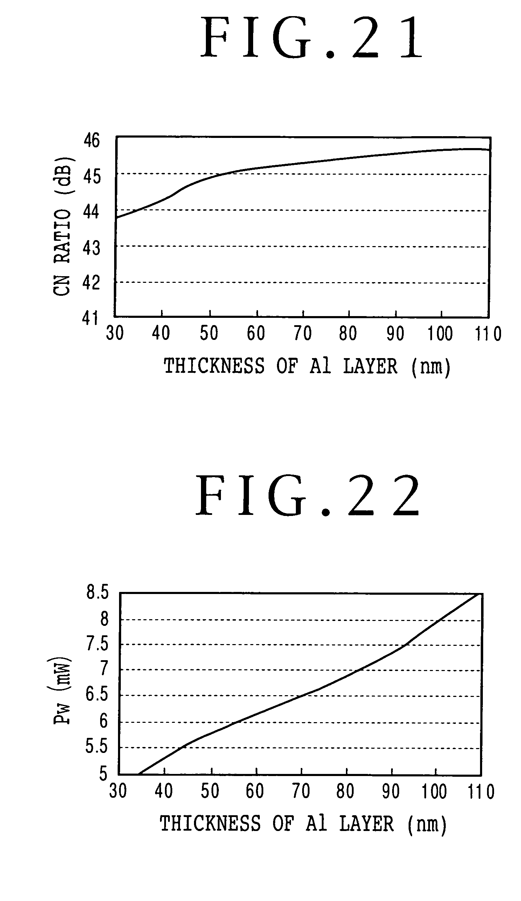

FIG. 21 shows the dependence of the CN ratio upon the thickness of the AlTi layer 24, and FIG. 22 shows the dependence of recording sensitivity upon the thickness of the AlTi layer 24. As apparent from FIGS. 21 and 22, the CN ratio increases with an increase in the thickness of the AlTi layer 24, and the recording power Pw also increases with an increase in the thickness of the AlTi layer 24. Accordingly, it is preferable that the thickness of the AlTi layer 24 is set in the range of 50 to 90 nm to improve the CN ratio with a low recording power.

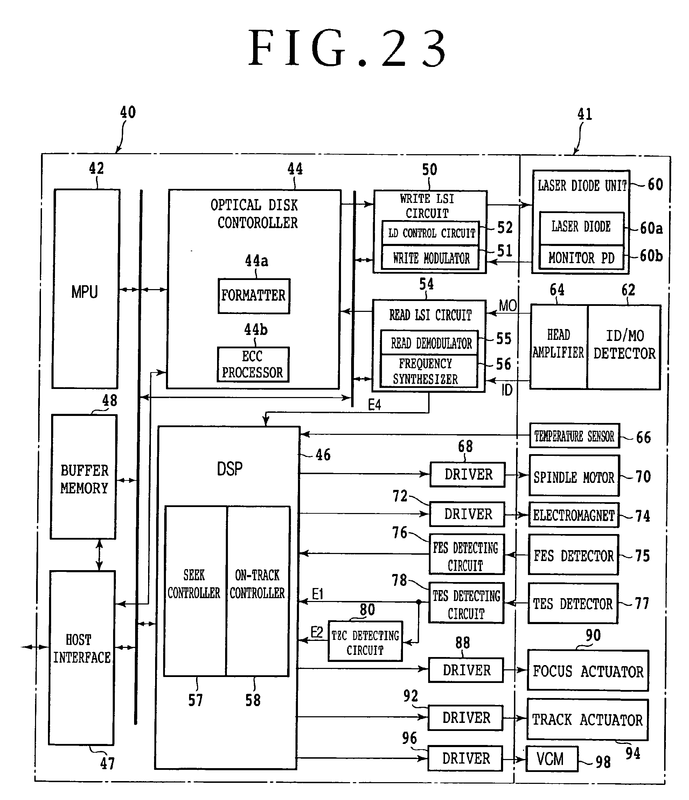

Referring to FIG. 23, there is shown a circuit block diagram of an optical disk drive according to the present invention. The optical disk drive shown in FIG. 23 is composed generally of a control unit 40 and an enclosure 41. The control unit 40 includes an MPU 42 for performing general control of the optical disk drive, a host interface 47 for exchanging commands and data between the optical disk drive and the host equipment, an optical disk controller (ODC) 44 for performing processing required for read/write of data on an optical disk medium, a digital signal processor (DSP) 46, and a buffer memory 48. The buffer memory 48 is used commonly for the MPU 42, the optical disk controller 44, and the host interface 47.

The optical disk controller 44 includes a formatter 44a and an ECC processor 44b. In write access, the formatter 44a divides NRZ write data into the sectors of the medium to create a recording format. The ECC processor 44b creates an ECC code per sector write data and adds it to the recording format. The ECC processor 44b further creates a CRC code as required and adds it to the recording format. Further, the ECC processor 44b converts the sector data after ECC encoded into a 1-7RLL code, for example.

The formatter 44a creates a logical block address (LBA) used in accessing from an OS. The LBA is preliminarily programmed according to the recording capacity of the optical disk medium, and this program is preliminarily stored in the form of firmware in the formatter 44a. The formatter 44a further preliminarily stores a program for converting the LBA into a track address and a sector address. Further, a defective sector number found in performing physical formatting of the optical disk medium is also stored into the formatter 44a.

In read access, sector read data demodulated is subjected to 1-7RLL inversion, and the ECC processor 44b performs CRC check and error detection and correction. Further, the formatter 44a links NRZ data in sectors and transfers a stream of NRZ read data to the host equipment. A write LSI circuit 50 is controlled by the optical disk controller 44. The write LSI circuit 50 has a write modulator 51 and a laser diode control circuit 52. An output from the laser diode control circuit 52 is supplied to a laser diode unit 60 provided in an optical unit of the enclosure 41.

The laser diode unit 60 has a laser diode 60a and a monitoring photodetector 60b. The write modulator 51 converts write data into PPM recording or PWM recording format data. As an optical disk for performing recording/ reproduction by using the laser diode unit 60, i.e., a rewritable magneto-optical (MO) cartridge medium, the optical disk drive of the present invention may use any one of different kinds of MO cartridge media having recording capacities of 128 MB, 230 MB, 540 MB, 640 MB, 1.3 GB, and the optical recording medium of the present invention. If the numerical aperture (NA) of the objective lens is not less than 0.55, the optical disk is downwardly compatible with the optical recording medium of the present invention by using a blue laser having a wavelength of 405 nm.

Of these MO cartridge media, the 128 MB and 230 MB MO cartridge media adopt pit position modulation (PPM) recording such that data is recorded according to the presence or absence of a mark on the medium. Further, the recording format of the medium is CAV (constant angular velocity). On the other hand, the 540 MB, 640 MB, and 1.3 GB MO cartridge media capable of higher-density recording adopt pulse width modulation (PWM) recording such that data is recorded so as to correspond to the edges of a mark, i.e., the leading edge and trailing edge of a mark. Further, a zone CAV is adopted as the recording format of the medium.

Thus, the optical disk drive of the present invention can support various kinds of MO cartridge media having recording capacities of 128 MB, 230 MB, 540 MB, 640 MB, and 1.3 GB. Accordingly, when any one of these kinds of MO cartridge media is loaded into the optical disk drive, an ID portion formed as a plurality of prepits at a header portion of the medium is first read, and the kind of the medium is then recognized from the spacing of the prepits by the MPU 42, which in turn notifies the write LSI 50 of the result of this recognition. Further, when a CAD type MO cartridge is loaded into the optical disk drive, a predetermined value is set for this medium by the MPU 42, and this set value is supplied to the write LSI 50.

In the case of the 128 MB or 230 MB medium, the sector write data from the optical disk controller 44 is converted into PPM recording data by the write modulator 51, whereas in the case of the 540 MB, 640 MB, 1.3 GB medium, or the optical recording medium of the present invention, the sector write data is converted into PWM recording data by the write modulator 51. The PPM recording data or PWM recording data obtained by the write modulator 51 is supplied to the laser diode control circuit 52, and the laser diode 60a is driven to write the data onto the medium.

A read LSI circuit 54 has a read demodulator 55 and a frequency synthesizer 56. Return light from the medium irradiated with a laser beam output from the laser diode 60a is detected by an ID/MO detector 62, and is input as an ID signal and an MO signal through a head amplifier 64 into the read LSI circuit 54. Address information or the like at the header is detected as the ID signal, and a series of data on the identifier, track address, and sector address is reproduced to thereby allow recognition of the position of a beam spot on the medium.

The read demodulator 55 in the read LSI circuit 54 is provided with circuit functions such as an AGC circuit, filter, and sector mark detecting circuit. The read demodulator 55 creates a read clock and read data from the input ID signal and the input MO signal, and demodulates the PPM recorded data or PWM recorded data to the original NRZ data. A zone CAV is adopted as the control of a spindle motor 70. Accordingly, the MPU 42 performs setting and control of a frequency dividing ratio for generation of a clock frequency corresponding to the zone, to the frequency synthesizer 56 incorporated in the read LSI circuit 54.

The frequency synthesizer 56 is a PLL circuit having a programmable frequency divider, which generates a reference clock as a read clock having a predetermined inherent frequency according to a zone (band) position on the medium. More specifically, the frequency synthesizer 56 is configured by a PLL circuit having a programmable frequency divider, which generates a reference clock having a frequency fo according to a frequency dividing ratio (m/n) set according to a zone number by the MPU 42. The frequency fo is given by:

$$fo = (m/n) \times fi$$

In the above expression, the denominator n of the frequency dividing ratio (m/n) represents an inherent value according to the kind of the medium, i.e., 128 MB, 230 MB, 540 MB, 640 MB, 1.3 GB medium, or the optical recording medium of the present invention. On the other hand, the numerator m of the frequency dividing ratio (m/n) represents a value changing according to the zone position on the medium. This value is preliminarily stored as table information of values corresponding to zone numbers on each medium.

The read LSI circuit 54 further outputs an MOXID signal E4 to the DSP 46. The MOXID signal E4 is a signal having an H level (bit 1) in an MO region as a data region and an L level (bit 0) in an ID region where the prepits are formed. That is, this signal indicates physical positions of the MO region and the ID region on the recording track of the medium. The read data demodulated in the read LSI 54 is supplied to the optical disk controller 44, and then undergoes 1-7RLL inversion and CRC check and ECC processing by the encoding function of the ECC processor 44b to restore the NRZ sector data. Further, the NRZ sector data is linked to the stream of the NRZ read data in the formatter 44a, and thereafter transferred through the buffer memory 48 and the host interface 47 to the host equipment.

A detection signal from a temperature sensor 66 provided in the enclosure 41 is supplied through the DSP 46 to the MPU 42. The MPU 42 controls optimum values of read, write, and erase optical powers in the laser diode control circuit 52 according to an environmental temperature inside the disk drive detected by the temperature sensor 66. The laser diode control circuit 52 controls the write power to 6.0 mW, for example, and controls the read power to 2.0 mW, for example. Optical modulation recording is carried out for the 128 MB medium to the 1.3 GB medium, whereas both optical modulation recording and magnetic modulation recording may be adopted for the magneto-optical recording medium of the present invention. The MPU 42 further controls a spindle motor 70 provided in the enclosure 41 through the DSP 46 and a driver 68. Because the recording format of the MO cartridge medium is a zone CAV, the spindle motor 70 is driven to rotate the disk medium at a constant speed of 4500 rpm, for example. The linear velocity of the medium is 7.5 m/s both in recording data and in reproducing data.

The MPU 42 further controls an electromagnet 74 provided in the enclosure 41 through the DSP 46 and a driver 72. The electromagnet 74 is located opposite to the beam irradiation side of the MO cartridge loaded into the disk drive, and functions to supply an external magnetic field to the medium. The DSP 46 has a servo function for positioning the laser beam from the laser diode 60a with respect to the medium, and includes a seek controller 57 for seeking the laser beam to a target track to position the beam spot on the target track and an on-track controller 58 for making the laser beam trace the center of the target track.

To realize the servo function of the DSP 46, an FES detector 75 for detecting the return light from the medium irradiated with the laser beam is provided in the optical unit in the enclosure 41, and an FES detecting circuit 76 produces a focus error signal from an output from the FES detector 75 to input the focus error signal into the DSP 46. Further, a TES detector 77 for detecting the return light from the medium is provided in the optical unit in the enclosure 41, and a TES detecting circuit 78 produces a tracking error signal E1 from an output from the TES detector 77 to input the tracking error signal E1 into the DSP 46.

The tracking error signal E1 is input into a TZC (Track Zero Cross) detecting circuit 80, in which a track zero cross pulse E2 is produced. The track zero cross pulse E2 from the TZC detecting circuit 80 is input into the DSP 46. The DSP 46 further controls to drive a focus actuator 90, lens actuator 94, and VCM 98 through drivers 88, 92, and 96, respectively, to control the position of the beam spot on the medium.

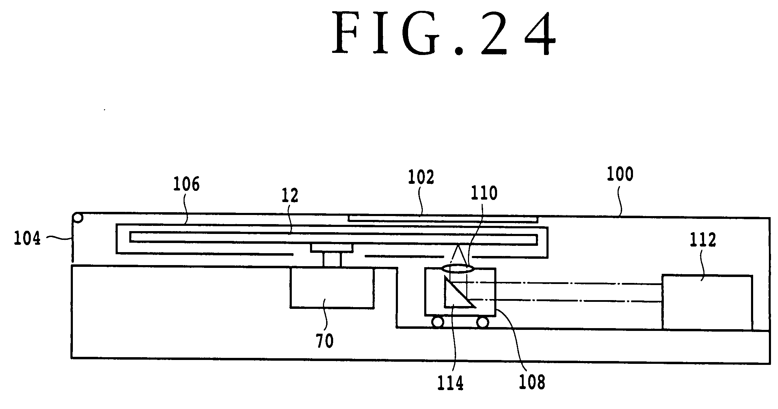

Referring to FIG. 24, there is shown a schematic configuration of the enclosure 41 of the optical disk drive. The spindle motor 70 is provided in a housing 100. When an MO cartridge 106 is inserted into the housing 100 through an inlet door 104, the MO medium 12 in the MO cartridge 106 is chucked to a hub of a rotating shaft of the spindle motor 70, thus loading the MO medium 12. A carriage 108 is provided below the MO medium 12 loaded into the disk drive so as to be movable across the tracks of the MO medium 12 by the VCM 98. An objective lens 110 and a beam raising prism 114 are mounted on the carriage 108.

The laser beam from the laser diode 60a provided in a fixed optical system 112 is reflected by the beam raising prism 114 to enter the objective lens 110. The laser beam is focused by the objective lens 110 onto the recording surface of the MO medium 12. The objective lens 110 is controlled to move along its optical axis by the focus actuator 90 in the enclosure 41 shown in FIG. 23. The objective lens 110 is further controlled to move across a given number of tracks (e.g., tens of tracks) of the MO medium 12, i.e., in the radial direction thereof, by the track actuator 94 in the enclosure 41 shown in FIG. 23. An electromagnet 102 for applying an external magnetic field to the MO medium 12 is provided above the MO medium 12 loaded into the disk drive.

**Industrial Applicability**

According to the present invention as described above in detail, it is possible to provide an optical recording medium having lands and grooves as recording tracks which can improve the CN ratio and obtain enough small crosstalk characteristics even in the case of using a blue laser having a small beam spot for recording/reproduction of data. Further, it is possible to provide an optical disk drive suitable for recording/reproduction of data to/from such an optical recording medium.

**Claims**

1. An optical recording medium having recording tracks consisting of a plurality of lands and a plurality of grooves, wherein the diameter of a laser beam to be used for recording/reproduction on a recording surface of said medium is 0.7 µm or less, said optical recording medium comprising:

   a transparent substrate on which said lands and said grooves are alternately formed; and
   an optically recordable recording layer provided on said transparent substrate;
   the width w1 of each land at the center of the height of the boundary between each land and each groove adjacent thereto, the width w2 of a flat top surface of each land, and the depth d of each groove being set to $0.4 \leqq w2/w1 \leqq 0.8$ and $25 \text{ nm} \leqq d \leqq 45 \text{ nm}$;
   at least each land having an edge portion formed as a curved surface.

2. An optical recording medium according to claim 1, wherein each groove has an edge portion formed as a curved surface.

3. An optical recording medium according to claim 1, wherein said recording layer comprises a magneto-optical recording layer formed of a rare earth-transition metal composite material.

4. A magneto-optical recording medium having recording tracks consisting of a plurality of lands and a plurality of grooves, wherein the diameter of a laser beam to be used for recording/reproduction on a recording surface of said medium is 0.7 µm or less, said magneto-optical recording medium comprising:

   a transparent substrate on which said lands and said grooves are alternately formed;
   a reproducing layer provided on said transparent substrate and formed of a rare earth-transition metal composite material having a relatively large Kerr rotation angle and a relatively small coercivity at room temperature; and
   a recording layer provided on said reproducing layer and formed of a rare earth-transition metal composite material having a relatively small Kerr rotation angle and a relatively large coercivity at room temperature;
   the width w1 of each land at the center of the height of the boundary between each land and each groove adjacent thereto, the width w2 of a flat top surface of each land, and the depth d of each groove being set to $0.4 \leqq w2/w1 \leqq 0.8$ and $25 \text{ nm} \leqq d \leqq 45 \text{ nm}$;
   at least each land having an edge portion formed as a curved surface.

5. A magneto-optical recording medium according to claim 4, further comprising a nonmagnetic layer interposed between said reproducing layer and said recording layer.

6. A magneto-optical recording medium according to claim 4, further comprising a magnetic intermediate layer interposed between said reproducing layer and said recording layer.

7. A magneto-optical recording medium having recording tracks consisting of a plurality of lands and a plurality of grooves, wherein the diameter of a laser beam to be used for recording/reproduction on a recording surface of said medium is 0.7 µm or less, said magneto-optical recording medium comprising:

   a transparent substrate on which said lands and said grooves are alternately formed;
   a first reproducing layer provided on said transparent substrate and having an axis of easy magnetization in a longitudinal direction at room temperature;
   a second reproducing layer provided on said first reproducing layer and having an axis of easy magnetization in a longitudinal direction at room temperature;
   a nonmagnetic block layer provided on said second reproducing layer;
   a recording layer provided on said nonmagnetic block layer and having an axis of easy magnetization in a perpendicular direction at room temperature in the case of a single layer;
   a nonmagnetic overcoat layer provided on said recording layer; and
   a metal layer provided on said nonmagnetic overcoat layer;
   the width w1 of each land at the center of the height of the boundary between each land and each groove adjacent thereto, the width w2 of a flat top surface of each land, and the depth d of each groove being set to $0.4 \leqq w2/w1 \leqq 0.8$ and $25 \text{ nm} \leqq d \leqq 45 \text{ nm}$;
   at least each land having an edge portion formed as a curved surface.

**8.** A magneto-optical recording medium according to claim 7, wherein said first and second reproducing layers respectively have Curie temperatures Tc1 and Tc2 set to Tc2 < Tc1 and 160°C $\leqq$ Tc2 $\leqq$ 190°C.

**9.** A magneto-optical recording medium according to claim 7, wherein said first reproducing layer has a thickness tr1 of 25 to 35 nm.

**10.** A magneto-optical recording medium according to claim 9, wherein said second reproducing layer has a thickness tr2 set to tr1 $\times$ 0.3 $\leqq$ tr2 $\leqq$ tr1 $\times$ 0.4.

**11.** A magneto-optical recording medium according to claim 7, wherein said nonmagnetic overcoat layer has a thickness of 5 to 15 nm.

**12.** A magneto-optical recording medium according to claim 7, wherein said metal layer has a thickness of 50 to 90 nm.

**13.** A magneto-optical recording medium according to claim 7, wherein said nonmagnetic overcoat layer is formed of SiN.

**14.** A magneto-optical recording medium according to claim 7, wherein said metal layer contains Al as a principal component.

**15.** A magneto-optical recording medium according to claim 7, wherein said nonmagnetic block layer has a thickness of 0.5 to 2.0 nm.

**16.** An optical storage device capable of at least reading information recorded on an optical recording medium having recording tracks consisting of a plurality of lands and a plurality of grooves, said optical storage device comprising:

an optical head for irradiating said optical recording medium with a laser beam having a diameter of 0.7 $\mu$m or less on a recording surface of said medium; and
a photodetector for generating a reproduction signal from reflected light reflected on said optical recording medium;
said optical recording medium comprising a transparent substrate on which said lands and said grooves are alternately formed and an optically recordable recording layer provided on said transparent substrate;
the width w1 of each land at the center of the height of the boundary between each land and each groove adjacent thereto, the width w2 of a flat top surface of each land, and the depth d of each groove being set to 0.4 $\leqq$ w2/w1 $\leqq$ 0.8 and 25 nm $\leqq$ d $\leqq$ 45 nm;
at least each land having an edge portion formed as a curved line.

# FIG.1

# FIG.2

12A

| SUBSTRATE | 4 |
| SiN | 14 |
| REPRODUCING LAYER (GdFeCo) | 16 |
| SiN (NONMAGNETIC LAYER) | 18 |
| RECORDING LAYER (TbFeCo) | 20 |
| SiN | 22 |
| Al | 24 |

# FIG.3

12B

| SUBSTRATE | 4 |
| SiN | 14 |
| FIRST REPRODUCING LAYER (GdFeCo) | 26 |
| SECOND REPRODUCING LAYER (GdFe) | 28 |
| SiN (NONMAGNETIC LAYER) | 30 |
| RECORDING LAYER (TbFeCo) | 32 |
| SiN | 22 |
| Al | 24 |

# FIG.4

12C

| | |
|---|---|
| SUBSTRATE | 4 |
| SiN | 14 |
| FIRST REPRODUCING LAYER (GdFeCo) | 26 |
| SECOND REPRODUCING LAYER (GdFe) | 28 |
| SiN (NONMAGNETIC LAYER) | 30 |
| RECORDING LAYER (TbFeCo) | 32 |
| REPRODUCING ASSIST LAYER (GdFeCo) | 34 |
| SiN | 22 |
| AlTi | 24 |

# FIG.5

12D

| | |
|---|---|
| SUBSTRATE | 4 |
| SiN | 14 |
| RECORDING LAYER (TbFeCo) | 36 |
| RECORDING ASSIST LAYER (GdFeCo) | 38 |
| SiN | 22 |
| Al | 24 |

# FIG.6

|  |  |
|---|---|
| SUBSTRATE | 4 |
| SiN | 14 |
| FIRST REPRODUCING LAYER (GdFeCo) | 39 |
| RECORDING LAYER (TbFeCo) | 36 |
| RECORDING ASSIST LAYER (GdFeCo) | 38 |
| SiN | 22 |
| Al | 24 |

12E

# FIG.7

# FIG.8

# FIG.9

| | |
|---|---|
| —□— | BEFORE ERASING |
| —○— | AFTER ERASING ON THE ADJACENT TRACKS |

CN RATIO (dB) vs W2/W1

# FIG.10

| | |
|---|---|
| —□— | BEFORE ERASING |
| —○— | AFTER ERASING ON THE ADJACENT TRACKS |

CN RATIO (dB) vs GROOVE DEPTH (nm)

# FIG.11

| | |
|---|---|
| —□— | BEFORE ERASING |
| —○— | AFTER ERASING ON THE ADJACENT TRACKS |

CN RATIO (dB) vs W2/W1

# FIG.12

| | |
|---|---|
| —□— | BEFORE ERASING |
| —○— | AFTER ERASING ON THE ADJACENT TRACKS |

CN RATIO (dB) vs GROOVE DEPTH (nm)

# FIG.13

Legend:
- □ BEFORE ERASING
- ○ AFTER ERASING ON THE ADJACENT TRACKS

Y-axis: CN RATIO (dB)
X-axis: W2/W1

# FIG.14

Legend:
- □ BEFORE ERASING
- ○ AFTER ERASING ON THE ADJACENT TRACKS

Y-axis: CN RATIO (dB)
X-axis: GROOVE DEPTH (nm)

# FIG.15

# FIG.16

# FIG.17

CN RATIO (dB) vs SECOND REPRODUCING LAYER THICKNESS RATIO (%)

# FIG.18

CN RATIO (dB) vs THICKNESS OF NONMAGNETIC BLOCK LAYER (nm)

# FIG.19

# FIG.20

# FIG.21

CN RATIO (dB) vs THICKNESS OF Al LAYER (nm)

# FIG.22

Pw (mW) vs THICKNESS OF Al LAYER (nm)

# FIG.23

# FIG.24

EP 1 511 028 A1

## INTERNATIONAL SEARCH REPORT

| International application No. |
|---|
| PCT/JP02/05382 |

**A. CLASSIFICATION OF SUBJECT MATTER**
Int.Cl$^7$ G11B11/105, G11B7/24, G11B7/007

According to International Patent Classification (IPC) or to both national classification and IPC

**B. FIELDS SEARCHED**

Minimum documentation searched (classification system followed by classification symbols)
Int.Cl$^7$ G11B11/105, G11B7/24, G11B7/007

Documentation searched other than minimum documentation to the extent that such documents are included in the fields searched

| | | | |
|---|---|---|---|
| Jitsuyo Shinan Koho | 1922–1996 | Toroku Jitsuyo Shinan Koho | 1994–2002 |
| Kokai Jitsuyo Shinan Koho | 1971–2002 | Jitsuyo Shinan Toroku Koho | 1996–2002 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2001-195785 A (Mitsubishi Chemical Corp.), 19 July, 2001 (19.07.01), Full text; all drawings (Family: none) | 1-5,7-16 |
| A | JP 10-011801 A (Hitachi, Ltd.), 16 January, 1998 (16.01.98), Full text; all drawings (Family: none) | 1-5,7-16 |
| A | JP 7-296434 A (Fujitsu Ltd.), 10 November, 1995 (10.11.95), Full text; all drawings & US 2001/0000483 A | 4,5 |

[X] Further documents are listed in the continuation of Box C.  ☐ See patent family annex.

| | |
|---|---|
| * Special categories of cited documents: <br> "A" document defining the general state of the art which is not considered to be of particular relevance <br> "E" earlier document but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| 06 August, 2002 (06.08.02) | 20 August, 2002 (20.08.02) |

| Name and mailing address of the ISA/ <br> Japanese Patent Office | Authorized officer |
|---|---|
| Facsimile No. | Telephone No. |

Form PCT/ISA/210 (second sheet) (July 1998)

**INTERNATIONAL SEARCH REPORT**

International application No.

PCT/JP02/05382

C (Continuation).   DOCUMENTS CONSIDERED TO BE RELEVANT

| Category* | Citation of document, with indication, where appropriate, of the relevant passages | Relevant to claim No. |
|---|---|---|
| A | JP 9-288853 A  (Sharp Corp.),<br>04 November, 1997 (04.11.97),<br>Full text; all drawings<br>& EP 803870 A          & KR 97071568 A<br>& US 6042954 A | 4,5 |
| A | WO 97/22969 A1  (Hitachi Maxell, Ltd.),<br>26 June, 1997 (26.06.97),<br>Full text; all drawings<br>& US 6226234 A          & AU 1171397 A<br>& CN 1207822 A | 4,5,7-15 |
| A | JP 11-185312 A  (Sanyo Electric Co., Ltd.),<br>09 July, 1999 (09.07.99),<br>Full text; all drawings<br>& US 2002/0054544 A | 7-15 |
| A | JP 2000-163817 A  (Sharp Corp.),<br>16 June, 2000 (16.06.00),<br>Full text; all drawings<br>& US 6278668 A | 7-15 |

Form PCT/ISA/210 (continuation of second sheet) (July 1998)

**EP 1 511 028 A1**

## INTERNATIONAL SEARCH REPORT

| International application No. |
| --- |
| PCT/JP02/05382 |

**Box I    Observations where certain claims were found unsearchable (Continuation of item 1 of first sheet)**

This international search report has not been established in respect of certain claims under Article 17(2)(a) for the following reasons:

1. ☐ Claims Nos.:

   because they relate to subject matter not required to be searched by this Authority, namely:

2. ☒ Claims Nos.: 6

   because they relate to parts of the international application that do not comply with the prescribed requirements to such an extent that no meaningful international search can be carried out, specifically:

   The fact of having a magnetic intermediate layer is not described in the specification.

3. ☐ Claims Nos.:

   because they are dependent claims and are not drafted in accordance with the second and third sentences of Rule 6.4(a).

**Box II    Observations where unity of invention is lacking (Continuation of item 2 of first sheet)**

This International Searching Authority found multiple inventions in this international application, as follows:

1. ☐ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**    ☐    The additional search fees were accompanied by the applicant's protest.

☐    No protest accompanied the payment of additional search fees.

Form PCT/ISA/210 (continuation of first sheet (1)) (July 1998)